# EUROPEAN PATENT APPLICATION

(11) **EP 4 509 294 A1**
(43) Date of publication of application: **19.02.2025**
(21) Application number: 24793965.5
(22) Date of filing: 12.06.2024
(51) Int. Cl.: B29C 67/20, F04D 29/38

(54) **METHOD FOR PRODUCING POROUS MEMBER, FAN, AND CONSTITUENT MEMBER**

(30) Priority: 30.06.2023 JP 2023108004
(71) Applicant: Daikin Industries, Ltd., Osaka-shi, Osaka 530-0001 (JP)
(72) Inventor: KONISHI, Hideaki, Osaka-shi, Osaka 5300001 (JP); MORITA, Koji, Osaka-shi, Osaka 5300001 (JP); YAMASAKI, Takahiro, Osaka-shi, Osaka 5300001 (JP); TERAOKA, Hironobu, Osaka-shi, Osaka 5300001 (JP); YAMASHITA, Yuki, Osaka-shi, Osaka 5300001 (JP)
(74) Representative: Hoffmann Eitle
(86) International application number: PCT/JP2024/021386
(87) International publication number: WO 2025/004809

(57) **Abstract**

A method for producing a porous member includes: cutting a resin member (60) having a rod shape at a predetermined interval along a direction orthogonal to a longitudinal direction; filling a mold with the resin member (60) cut; and heating the resin member (60) filling the mold.

## Description

### TECHNICAL FIELD

The present disclosure relates to a method for producing a porous member, a fan, and a component.

### BACKGROUND ART

A method for producing a porous molding described in Patent Document 1 includes heating resin foamed particles filling a mold to expand them. As a result, the resin foamed particles are bonded to each other, and a porous molding having a predetermined porosity is formed.

### CITATION LIST

### PATENT DOCUMENT

Patent Document 1: Japanese Unexamined Patent Publication No. H7-168577

### SUMMARY OF THE INVENTION

### TECHNICAL PROBLEM

As a method for obtaining resin particles before filling the mold, there is a method for pulverizing resin pellets which are resin lumps. In this method, the pulverized resin pellets are sieved to obtain resin particles in a predetermined size. In view of the strength and acoustic absorption properties of the porous molding, it is preferable to make voids in the porous molding be in a uniform size. However, the sizes of the voids in the porous molding obtained by the method for pulverizing resin pellets are not sufficiently uniform, and there is room for improvement.

An object of the present disclosure is to provide a method for producing a porous molding, which reduces variation in size of voids.

### SOLUTION TO THE PROBLEM

A first aspect is directed to a method for producing a porous molding. The method includes: cutting a resin member (60) having a rod shape at a predetermined interval along a direction orthogonal to a longitudinal direction; filling a mold with the resin member (60) cut; and heating the resin member (60) filling the mold.

The first aspect allows, as compared with the method of pulverizing and sieving resin pellets, the resin member (60) after the cutting to be in a uniform size, thereby reducing variation in size of the voids formed in the porous member. In addition, the voids can be formed evenly in the entire porous member.

A second aspect is an embodiment of the first aspect. In the second aspect, the cutting includes cutting the resin member (60) having a rod shape at a constant first interval, a length of the first interval is equal to a length of the resin member (60) in a width direction orthogonal to the longitudinal direction, and the length of the resin member (60) having a rod shape in the width direction is equal to or more than a minimum value and equal to or less than a maximum value which are obtained when the resin member (60) is projected on a plane parallel to the longitudinal direction of the resin member (60).

The second aspect allows the length of the resin member (60) after the cutting in the width direction and the length of the longitudinal direction to be uniform. This can reduce variation in size of the voids formed in the porous member.

A third aspect is an embodiment of the first or second aspect. In the third aspect, a length of the resin member (60) having a rod shape in the width direction orthogonal to the longitudinal direction is from 300 µm to 700 µm inclusive.

The third aspect allows the voids in a desired size to be formed by adjusting the length of the resin member (60) to be cut.

A fourth aspect is directed to a fan including a blade provided with the porous member produced by the method of any one of the first to third aspects.

The fourth aspect allows a fan including a porous member having voids formed evenly and uniform in size to be produced.

A fifth aspect is directed to a component forming an air passage, including a porous member (51) produced by the method of any one of the first to third aspects.

The fifth aspect allows a component including a porous member having voids formed evenly and uniform in size to be produced.

### BRIEF DESCRIPTION OF THE DRAWINGS

FIG. 1 is a front view of a fan according to an embodiment.
FIG. 2 is a side view of the fan.
FIG. 3 is a schematic view of a shape of a resin member according to the embodiment.
FIG. 4 is a flowchart showing processes of a production method according to the embodiment.
FIG. 5 shows micrograms of a porous member. In FIG. 5, (a) shows a porous member produced by the production method according to the embodiment, and (b) shows a porous member produced by a known production method.
FIG. 6 shows cross sections of a bell mouth and a fan in a direction of an axis.
FIG. 7 shows cross sections of a fan casing and an impeller orthogonal to the direction of the axis.

### DESCRIPTION OF EMBODIMENTS

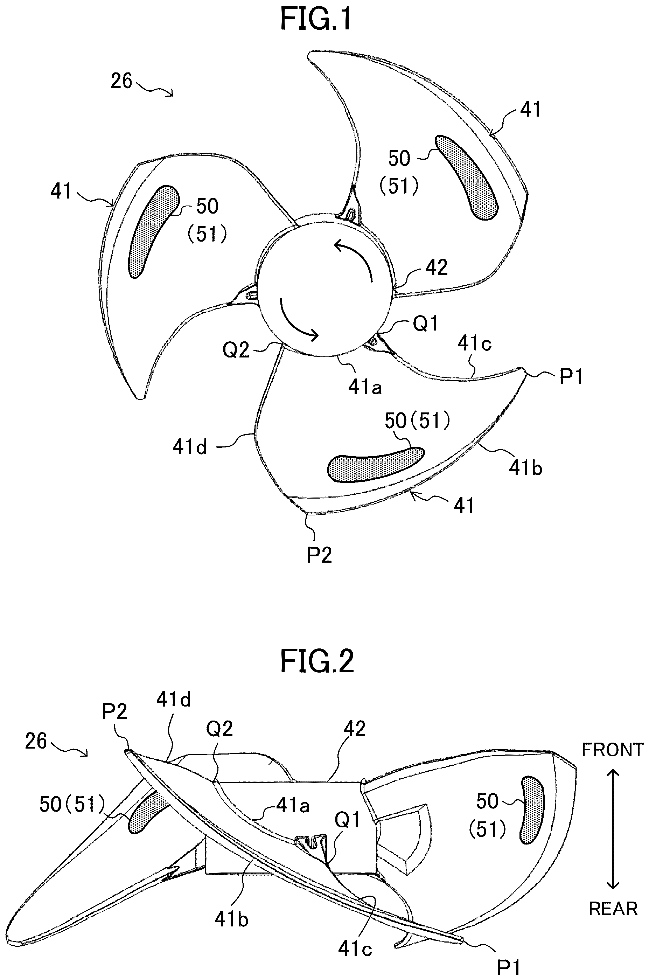

Embodiments of the present disclosure will be described with reference to the drawings. The following embodiments are merely exemplary ones in nature, and are not intended to limit the scope, application, or uses of the invention. Features of the embodiments, variations, and other examples described below can be combined or partially substituted within the range where the present invention can be embodied. Note that "front" and "rear" described below indicate directions indicated by arrows shown in FIG. 2.

### (1) General Configuration of Fan

As illustrated in FIGS. 1 and 2, a porous member (51) according to this embodiment is applied to a propeller-type fan (26). The fan (26) is connected directly to a motor (not shown). The fan (26) is driven by a motor to rotate. The fan (26) according to this embodiment includes a hub (42) and three blades (41). The number of blades is a mere example, and is not limited thereto.

The hub (42) is a cylindrical member with a closed front end. The hub (42) is arranged coaxially with a drive shaft of the motor. A boss (not shown) is formed at the rear end of the hub (42). The drive shaft of the motor is connected to the boss.

The three blades (41) are connected to the outer peripheral surface of the hub (42) and arranged at an equal interval in the circumferential direction. The three blades (41) are provided so that wind flows from the rear of the sheet toward the front of the sheet when the hub (42) rotates in the direction of arrows shown in FIG. 1. Specifically, each of the blades (41) has four edges (41a, 41b, 41c, 41d) having different shapes. The four edges (41a, 41b, 41c, 41d) include an inner edge (41a), an outer edge (41b), a front edge (41c), and a rear edge (41d).

The inner edge (41a) is an edge of the blade (41) in contact with the outer peripheral surface of the hub (42). The inner edge (41a) is provided to be inclined with respect to the direction of the axis of the hub (42) from the front end to the rear end of the hub (42).

The outer edge (41b) is an edge facing the inner edge (41a). Similarly to the inner edge (41a), the outer edge (41b) is also inclined with respect to the direction of the axis of the hub (42). The outer edge (41b) is longer in length than the inner edge (41a). One end P1 of the outer edge (41b) along the rotation direction is located forward of one end Q1 of the inner edge (41a) along the rotation direction. The one end P1 of the outer edge (41b) is located rearward of the rear end of the hub (42). The other end P2 of the outer edge (41b) along the rotation direction and the other end Q2 of the inner edge (41a) along the rotation direction are located substantially on the same radial direction of the hub when the fan (26) is viewed from the front.

The front edge (41c) is an edge of the blade (41) on the front side along the rotation direction The front edge (41c) connects the one end P1 of the outer edge (41b) and the one end Q1 of the inner edge (41a). The front edge (41c) is formed to be curved rearward in the rotation direction. The rear edge (41d) is an edge of the blade (41) in the rear side along the rotation direction. The rear edge (41d) connects the other end P2 of the outer edge (41b) and the other end Q2 of the inner edge (41a). The rear edge (41d) is formed to be curved rearward in the rotation direction.

### (2) Porous Portion

Each of the blades (41) is provided with a porous portion (50). The porous portion (50) is made of a porous material having a plurality of successive fine pores. The porous portion (50) of this embodiment is made of a porous member (51) made of resin, which will be described later. The porous portion (50) is provided to penetrate the blade (41) in the thickness direction. The porous portion (50) is formed as part of the blade (41). Specifically, when the fan (26) rotates, air flows toward the front side of the sheet. Thus, one surface of the blade (41) serves as a negative pressure surface. The velocity of the air flowing along the negative pressure surface becomes lower as the air approaches the blade, i.e., the velocity distribution becomes uneven. This may cause separation of air from the blade and generate noise. The porous member (51) is provided at a position where the porous member (51) may cause the separation. The porous portion (50) reduces the unevenness of the velocity distribution of air on the surface of the blade and reduces separation of the air from the blade (41), thereby reducing noise.

### (3) Molding of Fan

In the fan (26), a portion other than the porous portion (50) is made of non-porous resin. The fan (26) is molded by, for example, insert molding. Specifically, the porous member (51) is placed at a predetermined position in a mold, and the mold is filled with resin, thereby forming a hub (42) and a blade (41) provided with a porous member (51).

### (4) Production of Porous Member

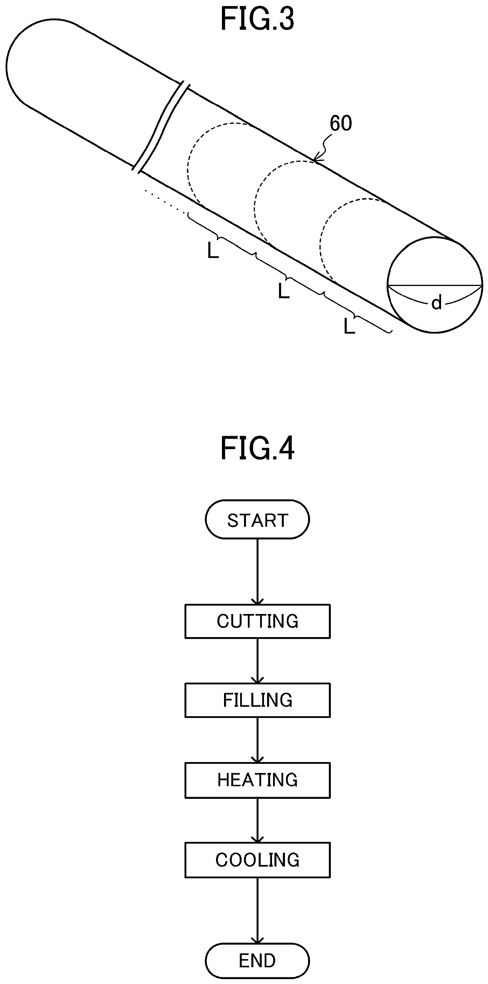

Next, a method for producing a porous member (51) forming a porous portion (50) will be described. As illustrated in FIG. 3, a resin member (60) having a rod shape is used as a raw material of the porous member (51). The resin member (60) is, for example, a foamed resin. The resin member (60) is an elongated member having a circular cross section orthogonal to the longitudinal direction. The diameter d of the circular cross section means the same as the length of the resin member (60) in the width direction orthogonal to the longitudinal direction. The diameter d is from 300 µm to 700 µm inclusive. The diameter d may be from 400 µm to 600 µm inclusive, or from 450 µm to 550 µm inclusive. In production of the porous member, a resin member having a single diameter d may be used, or a plurality of resin members having different diameters d may also be used.

As illustrated in FIG. 4, the method for producing a porous member (51) includes cutting, filling, heating, and cooling. The cutting includes cutting a resin member (60) having a rod shape at a predetermined interval along a direction orthogonal to the longitudinal direction. When the predetermined interval is defined as a first interval L, the first interval L is equal to the length of the resin member (60) in the width direction orthogonal to the longitudinal direction (see FIG. 3). In other words, the first interval L is the same length as the diameter d.

In the cutting, the resin member is continuously cut at the first interval L. Segments of the resin member obtained by the cutting are sequentially collected. In the cutting, the resin member may be cut one by one, or a plurality of resin members may be bundled and cut at the same time. In view of the number of segments of the resin member obtained by one cutting, it is preferable to cut a plurality of resin members at the same time.

The filling includes filling a mold with the cut resin member. The mold is formed to match the shape of the porous member (51) provided for the blade (41).

In the heating, the resin member filling the mold is heated. The resin member filling the mold is placed in a predetermined heating furnace, and the resin member is heated at a predetermined temperature for a predetermined time.

In the cooling, the resin member after the heating is cooled. Accordingly, a resin portion having a predetermined shape is formed.

### (5) Porous Member

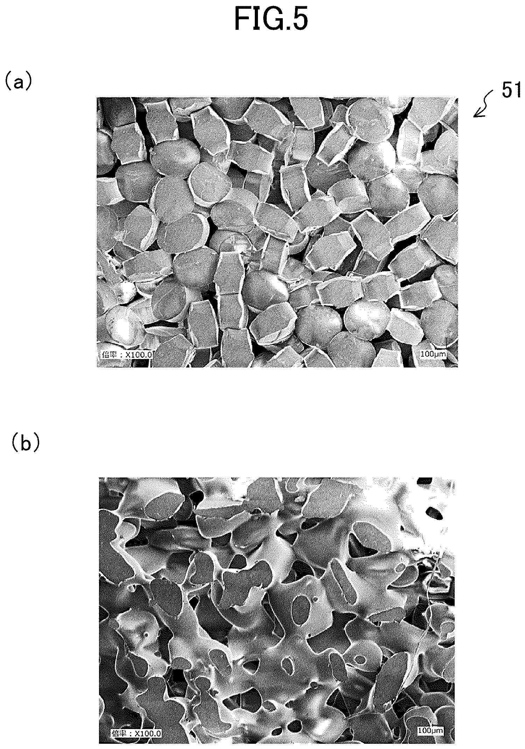

FIG. 5 shows micrograms of a porous member produced by the method according to this embodiment and a porous member produced by a known method. For both the porous members, temperature conditions in the heating are the same.

As illustrated in (a) in FIG. 5, in the porous member (51) produced using a resin member (60) having a rod shape, voids are formed evenly, and the porosity is relatively high. The tensile strength of the porous member (51) measured under predetermined conditions was 2.7 MPa, which demonstrated that the porous member (51) had a strength sufficient to be used in a fan (26). Further, the effect of reducing noise when the fan (26) was rotated at the predetermined number of rotations was examined, and the noise was -0.4 dB relative to the noise of the fan (26) without the porous member (51). That is, it was demonstrated that the porous member (51) of this embodiment had an effect of reducing noise. Further, since the shapes of resin particles in the porous member (51) are substantially maintained, a porous member having voids in a desired size and having a desired porosity can be obtained by controlling the thickness (the size of the cross section orthogonal to the longitudinal direction) of the resin member (60) having a rod shape as well as adjusting the first interval. As can be seen from above, according to the selected resin member (60) having a rod shape, a porous member (51) having desired strength and desired sound dumping performance can be produced. Thus, a porous member (51) suitable for the fan (26) can be produced.

In contrast, as can be seen in (b) in FIG. 5, in the known method for pulverizing resin pellets, voids are not formed evenly as compared with (a) in FIG. 5, and the shapes of the voids were also not uniform.

### (6) Features

### (6-1) First Feature

The method for producing a porous member (51) according to this embodiment includes cutting a resin member (60) having a rod shape at a predetermined interval along a direction orthogonal to the longitudinal direction, filling a mold with the resin member (60) cut, and heating the resin member (60) filling the mold.

This allows, as compared with the method of pulverizing and sieving resin pellets, the resin member (60) after the cutting to be in a uniform size, thereby reducing variation in size of the voids formed in the porous member (51). In addition, the voids can be formed evenly in the entire porous member (51). Further, since the size of the resin member (60) after the cutting can be made uniform, the amount of the resin member (60) which cannot be used for the production and are discarded can be reduced, and the production process can be shortened because there is no need to sieve the resin member (60).

### (6-2) Second Feature

In the cutting of the method for producing a porous member (51) according to this embodiment, a resin member (60) having a rod shape is cut at a constant first interval. The length of the first interval is equal to the length of the resin member (60) in a width direction orthogonal to the longitudinal direction.

This allows the lengths of the resin member (60) after the cutting in the width direction and the longitudinal direction to be uniform. This can reduce variation in size of the voids formed in the porous member (51).

### (6-3) Third Feature

The length of the resin member (60) having a rod shape according to this embodiment in the width direction orthogonal to the longitudinal direction is from 300 µm to 700 µm inclusive. Thus, voids in a desired size can be formed by adjusting the length of the resin member (60) to be cut. For example, when the sizes of the voids are large, a resin member (60) which is relatively long in the width direction may be selected, and when the sizes of the voids are small, a resin member (60) which is relatively short in the width direction may be selected.

### (7) Other Embodiments

The foregoing embodiments may also be configured as follows.

The resin member (60) having a rod shape may not be a member having a circular cross section orthogonal to the longitudinal direction. The shape of the cross section of the resin member (60) having a rod shape, orthogonal to the longitudinal direction may be an ellipse or a polygon. In such a case, the first interval (the length in the width direction) in the cutting is equal to or more than a minimum value and equal to or less than a maximum value which are obtained when the resin member (60) having a rod shape is projected on a plane parallel to the longitudinal direction of the resin member (60).

In this embodiment, the blade (41) is described as a moving blade, but the porous member (51) may be provided for a stationary blade which does not rotate.

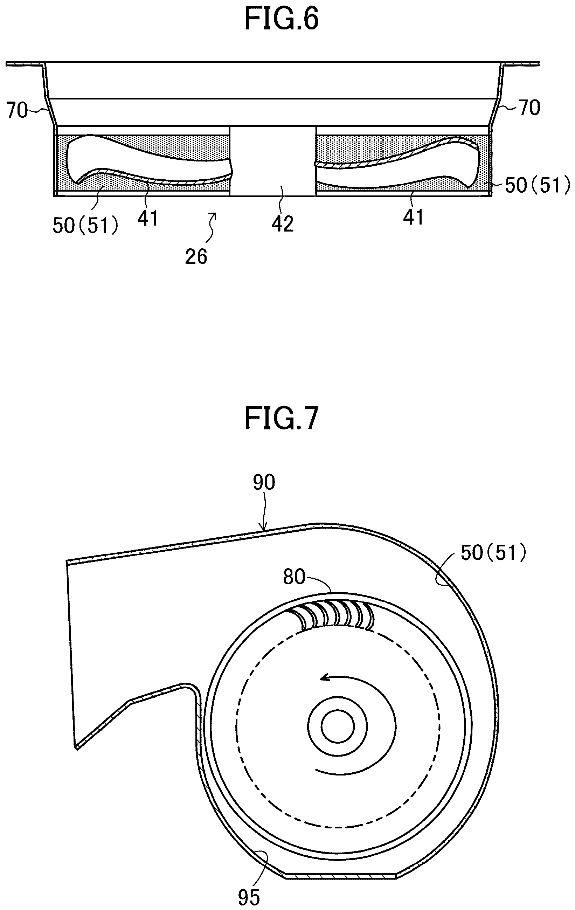

As illustrated in FIG. 6, the porous member (51) may be provided for a bell mouth (70). The bell mouth (70) illustrated in FIG. 6 is an example of a component forming an air passage. The bell mouth (70) is a tubular member provided around the fan (26). The air passage is formed between the inner surface of the bell mouth (70) and the blade (41). When the fan (26) rotates, air flowing through the air passage comes into contact with the inner surface of the bell mouth (70). The porous portion (50) may be provided for the entire inner surface of the bell mouth (70) or part of the inner surface. This can reduce separation of airflow from the inner surface of the bell mouth (70) and reduces noise.

As illustrated in FIG. 7, the porous member (51) may be provided for a peripheral wall (95) of a fan casing (90). The peripheral wall (95) illustrated in FIG. 7 is an example of a component forming an air passage. The fan casing (90) houses an impeller (80). The peripheral wall (95) is arranged to surround the impeller (80) inside the fan casing (90). The peripheral wall (95) is formed in a scroll shape. The air passage is formed between the impeller (80) and the peripheral wall (95). When the impeller (80) rotates, air flowing through the air passage comes into contact with the inner surface of the peripheral wall (95). The porous portion (50) may be provided for the entire inner surface of the peripheral wall (95) or part of the inner surface. This can reduce separation of airflow from the inner surface of the peripheral wall (95) and reduces noise.

The components (70, 95) are not limited to the bell mouth (70) and the peripheral wall (95). The components (70, 95) may be any members that form the air passage and come into contact with air flowing through the air passage.

While the embodiments and variations have been described above, it will be understood that various changes in form and details can be made without departing from the spirit and scope of the claims. The above embodiments and variations may be appropriately combined or replaced as long as the functions of the target of the present disclosure are not impaired.

### INDUSTRIAL APPLICABILITY

As can be seen from the foregoing description, the present disclosure is useful for a method for producing a porous member, a fan, and a component.

### DESCRIPTION OF REFERENCE CHARACTERS

- 26: Fan
- 41: Blade
- 51: Porous Member
- 60: Resin Member
- 70: Bell Mouth (Component)
- 95: Peripheral Wall (Component)

## Claims

1. A method for producing a porous member, the method comprising:
cutting a resin member (60) having a rod shape at a predetermined interval along a direction orthogonal to a longitudinal direction;
filling a mold with the resin member (60) cut; and
heating the resin member (60) filling the mold.

2. The method of claim 1, wherein
the cutting includes cutting the resin member (60) having a rod shape at a constant first interval,
a length of the first interval is equal to a length of the resin member (60) in a width direction orthogonal to the longitudinal direction, and
the length of the resin member (60) having a rod shape in the width direction is equal to or more than a minimum value and equal to or less than a maximum value which are obtained when the resin member (60) is projected on a plane parallel to the longitudinal direction of the resin member (60).

3. The method of claim 1 or 2, wherein
a length of the resin member (60) having a rod shape in the width direction orthogonal to the longitudinal direction is from 300 µm to 700 µm inclusive.

4. A fan comprising a blade provided with the porous member (51) produced by the method of any one of claims 1 to 3.

5. A component forming an air passage, the component comprising the porous member (51) produced by the method of any one of claims 1 to 3.
